# EUROPÄISCHE PATENTSCHRIFT

(11) **EP 3 118 484 B1**
(45) Veröffentlichungstag und Bekanntmachung des Hinweises auf die Patenterteilung: **21.03.2018**
(21) Anmeldenummer: 15177055.9
(22) Anmeldetag: 16.07.2015
(51) Int. Cl.: F16H 3/66

(54) **GETRIEBE FÜR EIN HYDRIDFAHRZEUG, ANTRIEBSSTRANG FÜR EIN HYBRIDFAHRZEUG MIT EINEM SOLCHEN GETRIEBE, SOWIE VERFAHREN ZUM ANFAHREN EINES HYBRIDFAHRZEUGES**
TRANSMISSION FOR A HYBRID VEHICLE, DRIVE TRAIN FOR A HYBRID VEHICLE WITH SUCH A GEAR, AND METHOD FOR STARTING A HYBRID VEHICLE
BOITE DE VITESSES POUR UN VEHICULE HYBRIDE, CHAINE CINEMATIQUE POUR UN VEHICULE HYBRIDE AYANT UNE TELLE BOITE DE VITESSE, ET PROCEDE DE DEMARRAGE D'UN VEHICULE HYBRIDE

(43) Veröffentlichungstag der Anmeldung: 18.01.2017
(73) Patentinhaber: ZF Friedrichshafen AG, 88046 Friedrichshafen (DE)
(72) Erfinder: BECK, Stefan, 88097 Eriskirch (DE); BREHMER, Martin, 88069 Tettnang (DE); FUEHRER, Kim, 88131 Lindau (DE); GEIGER, Andreas, 88074 Meckenbeuren (DE); HORN, Matthias, 88069 Tettnang (DE); RIEDISSER, Thomas, 88131 Lindau (DE)

(56) Entgegenhaltungen:
- DE-A1- 19 912 480
- DE-A1-102006 006 623
- DE-A1-102007 022 776
- US-B2- 8 858 376
- Thomas Belz: "Varianten von Mehrgang-Planetengetrieben", , 8 March 2016 (2016-03-08), XP55257458, Retrieved from the Internet: URL:https://register.epo.org/application?d ocumentId=EYPWMGE67270DSU&appnumber=EP1375 6488&showPdfPage=all [retrieved on 2016-03-11]

## Beschreibung

Die Erfindung betrifft ein Getriebe für ein Hybridfahrzeug, einen Antriebsstrang für ein Hybridfahrzeug mit einem solchen Getriebe, sowie ein Verfahren zum Anfahren eines Hybridfahrzeugs. Ein Getriebe bezeichnet hier insbesondere ein mehrgängiges Getriebe, bei dem eine Vielzahl von Gängen, also feste Übersetzungsverhältnisse zwischen der Antriebswelle und der Abtriebswelle des Getriebes, durch Schaltelemente vorzugsweise automatisch schaltbar sind. Bei den Schaltelementen handelt es sich hier beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Die Patentanmeldung DE 199 12 480 A1 der Anmelderin beschreibt ein automatisch schaltbares Kraftfahrzeuggetriebe mit drei Einsteg-Planetensätzen, drei Bremsen und zwei Kupplungen zum Schalten von sechs Vorwärtsgängen und einem Rückwärtsgang, sowie einer Antriebswelle und einer Abtriebswelle. Die Antriebswelle ist direkt mit dem Sonnenrad des zweiten Planetensatzes verbunden, und über die erste Kupplung mit dem Sonnenrad des ersten Planetensatzes und über die zweite Kupplung mit dem Steg des ersten Planetensatzes verbindbar. Das Sonnenrad des ersten Planetensatzes ist über die erste Bremse, der Steg des ersten Planetensatzes über die zweite Bremse und das Sonnenrad des dritten Planetensatzes über die dritte Bremse mit dem Gehäuse verbindbar. Der Steg des ersten Planetensatzes ist mit dem Hohlrad des zweiten Planetensatzes verbunden. Der Steg des zweiten Planetensatzes ist mit dem Hohlrad des dritten Planetensatzes verbunden. Das Hohlrad des ersten Planetensatzes ist mit dem Steg des dritten Planetensatzes und mit der Abtriebswelle verbunden. Zusätzlich können Freiläufe an jeder Stelle des Getriebes eingesetzt werden, beispielsweise zwischen einer Welle und dem Gehäuse.

Die Patentschrift US 8,858,376 B2 beschreibt ein Getriebe für einen Hybridantriebsstrang eines Fahrzeugs, welches im Wesentlichen den gleichen Aufbau zeigt. Darüber hinaus umfasst dieses Getriebe eine elektrische Maschine, welche mit einer Eingangswelle verbunden ist. Über eine Anfahrkupplung ist die Eingangswelle über einen Dämpfer mit einem Motor verbunden. Ein Freilauf verbindet das zweite Element des ersten Planetenradsatzes mit dem Gehäuse.

Die Patentanmeldung DE 103 33 429 A1 der Anmelderin zeigt eine Anordnung der Bremsen und Kupplungen für das im Stand der Technik bekannte Kraftfahrzeuggetriebe, wobei die als D bezeichnete zweite Bremse und die als C bezeichnete erste Bremse unmittelbar neben dem ersten Planetenradsatz angeordnet sind. Die zweite Bremse ist dabei radial außerhalb der ersten Bremse angeordnet. Beide Bremsen sind als Lamellenbremsen ausgebildet.

Die Patentanmeldung DE 10 2007 022 776 A1 der Anmelderin beschreibt ein Mehrstufengetriebe in Planetenbauweise mit drei Planetenradsätzen, sieben drehbare Wellen und sechs Schaltelemente. Einige der Schaltelemente werden bei Hochschaltungen nur geöffnet, jedoch nie geschlossen. Diese Schaltelemente können als formschlüssige Schaltelemente ausgeführt werden.

Getriebe für Hybridfahrzeuge weisen aufgrund der elektrischen Maschine üblicherweise einen erhöhten Bauraumbedarf auf. Je nach Anordnung des Antriebsstrangs, also entweder parallel oder quer zur Fahrtrichtung des Hybridfahrzeugs, hat dies unterschiedliche Auswirkungen auf das Hybridfahrzeug. Bei einem Antriebsstrang parallel zur Fahrtrichtung wird durch die erhöhte axiale Baulänge das Platzangebot im Innenraum des Hybridfahrzeugs beeinträchtigt. Dies ist unerwünscht. Bei einem Antriebsstrang quer zur Fahrtrichtung ist der Bauraum stark begrenzt, da der Verbund aus Verbrennungskraftmaschine, elektrischer Maschine und Getriebe üblicherweise zwischen den Längsträgern und den Rädern des Hybridfahrzeugs angeordnet ist.

Zudem ist bei einem Antriebsstrang stets auf einen guten mechanischen Wirkungsgrad zu achten. Kraftschlüssige Schaltelemente, wie beispielsweise Lamellenbremsen, beinträchtigen den Wirkungsgrad, da sie im geöffneten Zustand Schleppverluste erzeugen. Bei dem im Stand der Technik bekannten Kraftfahrzeuggetriebe treten solche Schleppverluste bei der zweiten Bremse besonders stark auf, da es aufgrund der hohen Drehmomentbelastung mit besonders großer Wirkoberfläche ausgebildet sein muss, und da es lediglich im ersten Vorwärtsgang und im Rückwärtsgang geschlossen ist. Die zweite Bremse ist daher bei Betrieb des Kraftfahrzeuggetriebes überwiegend geöffnet. Kraftschlüssige Schaltelemente verbessern jedoch das Lastschaltverhalten des Kraftfahrzeuggetriebes, und damit den Schaltkomfort für den Fahrer des Kraftfahrzeugs.

Es ist daher Aufgabe der Erfindung, das im Stand der Technik bekannte Kraftfahrzeuggetriebe hinsichtlich Bauraumbedarf und mechanischem Wirkungsgrad zu optimieren, ohne den Schaltkomfort negativ zu beeinflussen. Eine weitere Aufgabe der Erfindung ist es, ein geeignetes Verfahren zum Anfahren eines Hybridfahrzeugs anzugeben, welches einen Antriebsstrang mit einem solchen Getriebe aufweist.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Das Getriebe weist eine Antriebswelle, eine Abtriebswelle, drei Planetenradsätze, eine elektrische Maschine mit einem drehfesten Stator und einem drehbaren Rotor, sowie fünf Schaltelemente auf.

Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Ein Minus-Radsatz bezeichnet einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Jeder der drei Planetenradsätze weist ein erstes, zweites und drittes Element auf. Das erste Element wird stets durch das Sonnenrad des jeweiligen Planetenradsatzes gebildet. Bei einer Ausbildung als Minus-Radsatz wird das zweite Element durch den Steg des jeweiligen Planetenradsatzes gebildet, und das dritte Element durch das Hohlrad des jeweiligen Planetenradsatzes. Bei einer Ausbildung als Plus-Radsatz wird das zweite Element durch das Hohlrad des jeweiligen Planetenradsatzes gebildet, und das dritte Element durch den Steg des jeweiligen Planetenradsatzes. Der dritte Planetenradsatz ist stets als Minus-Radsatz ausgebildet. Der erste Planetenradsatz ist stets als Minus-Radsatz ausgebildet.

Die Antriebswelle ist mit dem ersten Element des zweiten Planetenradsatzes ständig verbunden. Die Abtriebswelle ist mit dem dritten Element des ersten Planetenradsatzes und mit dem zweiten Element des dritten Planetenradsatzes ständig verbunden. Das zweite Element des ersten Planetenradsatzes ist mit dem dritten Element des zweiten Planetenradsatzes ständig verbunden. Das zweite Element des zweiten Planetenradsatzes ist mit dem dritten Element des dritten Planetenradsatzes ständig verbunden. Der Rotor der elektrischen Maschine ist ständig mit der Antriebswelle verbunden, und zwar entweder direkt oder über ein Übersetzungsgetriebe.

Durch Schließen des ersten Schaltelements ist das erste Element des dritten Planetenradsatzes drehfest festsetzbar, indem es über das erste Schaltelement mit einem drehfesten Bauelement des Getriebes verbunden wird, beispielsweise mit dem Getriebegehäuse. Durch Schließen des zweiten Schaltelements ist das zweite Element des ersten Planetenradsatzes in gleicher Weise drehfest festsetzbar. Durch Schließen des dritten Schaltelements ist das erste Element des ersten Planetenradsatzes in gleicher Weise drehfest festsetzbar. Durch Schließen des vierten Schaltelements sind zwei der drei Elemente des zweiten Planetenradsatzes miteinander verbindbar.

Durch Schließen des fünften Schaltelements ist das erste Element des ersten Planetenradsatzes mit der Antriebswelle verbindbar.

Erfindungsgemäß sind das zweite und dritte Schaltelement axial zwischen der elektrischen Maschine und dem ersten Planetenradsatz angeordnet, wobei der Wirkradius des dritten Schaltelements größer ist als der Wirkradius des zweiten Schaltelements. Unter Wirkradius ist dabei der mittlere Radius des Wirkbereichs des jeweiligen Schaltelements zur Drehachse dieses Schaltelements zu verstehen. Das Durch Schließen des fünften Schaltelements ist das erste Element des ersten Planetenradsatzes mit der Antriebswelle verbindbar.

Erfindungsgemäß sind das zweite und dritte Schaltelement axial zwischen der elektrischen Maschine und dem ersten Planetenradsatz angeordnet, wobei der Wirkradius des dritten Schaltelements größer ist als der Wirkradius des zweiten Schaltelements. Unter Wirkradius ist dabei der mittlere Radius des Wirkbereichs des jeweiligen Schaltelements zur Drehachse dieses Schaltelements zu verstehen. Das zweite Schaltelement ist dabei als formschlüssiges Schaltelement ausgebildet, also beispielsweise als Klauen-Schaltelement, während das dritte Schaltelement als kraftschlüssiges Schaltelement ausgebildet ist, also beispielsweise als Lamellen-Schaltelement.

Eine derartige Anordnung des zweiten und dritten Schaltelements ist besonders für die Anwendung in einem Getriebe für einen Antriebsstrang geeignet, welcher im Wesentlichen parallel zur Fahrtrichtung des Kraftfahrzeugs ausgerichtet ist. Denn durch die Anordnung des zweiten und dritten Schaltelements axial zwischen der elektrischen Maschine und dem ersten Planetenradsatz bleibt das Getriebe radial kompakt, wodurch ein Mitteltunnel des Kraftfahrzeugs ebenso kompakt gestaltet werden kann. Das Platzangebot im Innenraum des Kraftfahrzeugs wird somit verbessert. Durch die erfindungsgemäße Anordnung des zweiten und dritten Schaltelements kann zudem die axiale Baulänge des Getriebes kurz gehalten werden, und zwar auf Kosten des Wirkdurchmessers des zweiten Schaltelements. Der Mitteltunnel des Kraftfahrzeugs kann somit früh verjüngt werden, wodurch ebenso das Platzangebot im Innenraum des Kraftfahrzeugs verbessert wird.

Die Ausbildung des zweiten Schaltelements als formschlüssiges Schaltelement verbessert dabei den mechanischen Wirkungsgrad. Formschlüssige Schaltelemente stellen im geschlossenen Zustand die Verbindung durch Formschluss her, und zeichnen sich im geöffneten Zustand durch wesentlich geringere Schleppverluste als kraftschlüssige Schaltelemente aus. Die radial weiter innenliegende Position des zweiten Schaltelements wäre für ein kraftschlüssiges Schaltelement unvorteilhaft, da durch den kleineren Wirkdurchmesser die Anzahl der Lamellen erhöht werden müsste, um die für den Reibleistungseintrag erforderliche Wirkoberfläche zu erhalten. Der kompakte Bauraumbedarf und die Verbesserung des Wirkungsgrads sind somit besonders in Kombination mit der Ausbildung des zweiten Schaltelements als formschlüssiges Schaltelement und der innenliegenden Anordnung dieses Schaltelements erreichbar.

Die Ausbildung des dritten Schaltelements als kraftschlüssiges Schaltelement ermöglicht dabei ein gutes Lastschaltverhalten, selbst bei einem formschlüssigen zweiten Schaltelement. Bei einer Zug-Hochschaltung vom ersten in den zweiten Gang kann das dritte Schaltelement Last übernehmen, wodurch die auf das zweite Schaltelement wirkende Belastung sinkt. Sobald das zweite Schaltelement einen lastfreien oder lastarmen Zustand erreicht, kann das zweite Schaltelement geöffnet werden. Eine Schub-Rückschaltung vom zweiten in den ersten Vorwärtsgang ist üblicherweise nicht erforderlich. Zudem ist bei einem Umschaltvorgang zwischen erstem Vorwärtsgang und Rückwärtsgang kein Öffnen oder Schließen des zweiten Schaltelements erforderlich, da es in beiden diesen Gängen geschlossen bleibt.

Vorzugsweise ist der Wirkradius des zweiten Schaltelements kleiner als der radiale Abstand zwischen der Antriebswellenachse und der Drehachse eines Planetenrads des ersten Planetenradsatzes. Der Wirkradius des dritten Schaltelements ist dabei größer als der radiale Abstand zwischen der Antriebswellenachse und der Drehachse des Planetenrads des ersten Planetenradsatzes. In anderen Worten liegt die Drehachse eines der Planetenräder des ersten Planetenradsatzes zwischen dem Wirkradius des zweiten Schaltelements und dem Wirkradius des dritten Schaltelements. Ist der erste Planetenradsatz als ein Plus-Radsatz ausgebildet, so ist die Drehachse eines der inneren Planetenräder maßgeblich. Unter der Antriebswellenachse ist dabei jene Achse zu verstehen, um die sich die Antriebswelle im Getriebe zu drehen vermag. Dadurch kann das kraftschlüssige dritte Schaltelement einen möglichst großen Durchmesser aufweisen, während das formschlüssige zweite Schaltelement einen möglichst geringen Durchmesser aufweist. Durch den möglichst großen Wirkdurchmesser des dritten Schaltelements ist die erforderliche Wirkoberfläche mit eine geringen Anzahl an Reibelementen erzielbar, wodurch der Wirkungsgrad verbessert wird. Der möglichst geringe Wirkdurchmesser des zweiten Schaltelements verringert dessen Anfälligkeit auf Verklemmen.

Vorzugsweise sind das erste, vierte und fünfte Schaltelement als kraftschlüssige Schaltelemente ausgebildet sind, wodurch ein gutes Lastschaltverhalten zwischen den Vorwärtsgängen erzielbar ist.

Vorzugsweise ist eine Vorrichtung zur Betätigung des zweiten Schaltelements zumindest abschnittsweise radial innerhalb des dritten Schaltelements angeordnet. In anderen Worten ist die Vorrichtung, welche zumindest zum Schließen des zweiten Schaltelements eingerichtet ist, zumindest abschnittsweise in einen Bauraum angeordnet welcher sich radial innerhalb des dritten Schaltelements befindet. Besonders bevorzugt befindet sich ein überwiegender Anteil der Vorrichtung zur Betätigung des zweiten Schaltelements in diesem Bauraum. Dies ist besonders in Verbindung mit einem als formschlüssigem Schaltelement ausgebildeten zweiten Schaltelement und einem als kraftschlüssigem Schaltelement ausgebildeten dritten Schaltelement vorteilhaft. Denn die schaltbare formschlüssige Verbindung kann dabei in unmittelbarer Nähe zum zweiten Element des ersten Planetenradsatzes angeordnet werden, wodurch die konstruktive Ausgestaltung vereinfacht wird. Das dritte Schaltelement kann auf einem für ein kraftschlüssiges Schaltelement vorteilhaften großen Durchmesser angeordnet werden. Der Bauraum radial innerhalb des dritten Schaltelements kann daher vorteilhaft für die Betätigung des zweiten Schaltelements genutzt werden, ohne die Abmessungen des Getriebes zu vergrößern.

Gemäß einer möglichen Ausgestaltung ist die Verbindung zwischen dem ersten Element des ersten Planetenradsatzes und dem dritten Schaltelement zumindest abschnittsweise radial innerhalb der Vorrichtung zur Betätigung des zweiten Schaltelements angeordnet. In anderen Worten umgreift die Anbindung des Sonnenrads des ersten Planetenradsatzes zum dritten Schaltelement die Vorrichtung zur Betätigung des zweiten Schaltelements radial innen.

Vorzugsweise ist die Vorrichtung zur Betätigung des zweiten Schaltelements mit einem Halteelement drehfest verbunden, wobei das Halteelement mit dem drehfesten Bauelement verbunden ist, also beispielsweise mit dem Getriebegehäuse. Durch das vom drehfesten Bauelement separate Halteelement kann die Montage des Getriebes vereinfacht werden, in dem das erste Schaltelement und die drei Planetenradsätze in ein bevorzugt topfartiges Gehäuse eingeführt werden, und anschließend das Halteelement montiert wird.

Vorzugsweise wirkt das Halteelement mit zumindest einem Axiallager zusammen, wobei dieses zumindest eine Axiallager dazu eingerichtet ist axiale Kräfte von zumindest einem der Planetenradsätze auf das Halteelement zu übertragen. Das Halteelement überträgt diese Kräfte in weiterer Folge auf das drehfeste Bauelement, idealerweise auf das Gehäuse des Getriebes. Die durch die Schrägverzahnung der Planetenradsätze erzeugten Axialkräfte können dabei auf kurzem Wege abgestützt werden, wodurch die Toleranzkette verbessert wird. Zudem bleibt die Antriebswelle im Wesentlichen von den Axialkräften, die von den Planetenradsätzen ausgehen, entkoppelt. Wirken andere Axialkräfte auf die Antriebswelle, beispielsweise hervorgerufen durch Betätigung von Schaltelementen, wird das Risiko einer gegenseitigen Beeinflussung der lastabhängigen Axialkräfte der Planetenradsätze und der situationsabhängigen Axialkräfte der Schaltelementbetätigung verringert.

Gemäß einer möglichen Ausführungsform ist die vorzugsweise lösbare Verbindung zwischen dem Halteelement und dem drehfesten Bauelement axial zwischen dem dritten Schaltelement und dem ersten Planetenradsatz angeordnet. Eine derartige Anbindung des Halteelements vereinfacht den Zusammenbau des Getriebes, und im Falle einer lösbaren Verbindung auch dessen Wartung.

Gemäß einer Ausführungsform ist die Vorrichtung zur Betätigung des zweiten Schaltelements als eine hydraulische Vorrichtung ausgebildet, welche zumindest dazu eingerichtet ist das zweite Schaltelement hydraulisch zu schließen. Vorzugsweise ist die Vorrichtung dazu eingerichtet, das zweite Schaltelement sowohl hydraulisch zu schließen als auch hydraulisch zu öffnen. Dabei erfolgt die Zuführung von Hydraulikfluid zur Vorrichtung durch zumindest einen Fluidkanal, welcher im Halteelement ausgebildet ist. Eine solche Anbindung an das Hydrauliksystem des Getriebes vereinfacht die Führung des Hydraulikfluids, da zur hydraulischen Betätigung des zweiten Schaltelements keine Durchführung des Fluids durch rotierende Teile des Getriebes erforderlich ist.

Gemäß einer alternativen Ausführungsform ist die Vorrichtung zur Betätigung des zweiten Schaltelements als eine elektromagnetische oder elektromechanische Vorrichtung ausgebildet, welche zumindest dazu eingerichtet ist das zweite Schaltelement zu schließen. Das Öffnen des zweiten Schaltelements erfolgt im Falle einer elektromagnetischen Betätigung bevorzugt mittels Federkraft. Wird der elektromagnetischen Vorrichtung kein Strom zugeführt, so führt die Federkraft zum Öffnen des zweiten Schaltelements. Eine solche Betätigung ist besonders energieeffizient, da das zweite Schaltelement lediglich im ersten Vorwärtsgang und im Rückwärtsgang geschlossen ist. Das zweite Schaltelement ist folglich im Betrieb des Getriebes überwiegend geöffnet. Eine elektromechanische Vorrichtung ist bevorzugt selbsthemmend ausgeführt, sodass die Vorrichtung im stromlosen Zustand ihre Position beibehält. Das Öffnen und Schließen erfolgt dabei durch aktive Bestromung der elektromechanischen Vorrichtung. Alternativ dazu kann das Öffnen auch mittels Federkraft erfolgen. Die elektromechanische Vorrichtung kann beispielsweise als Kugelrampenmechanismus ausgebildet sein, welcher durch einen Elektromotor angetrieben wird.

Vorzugsweise sind das vierte und fünfte Schaltelement axial zwischen der elektrischen Maschine und dem zweiten und dritten Schaltelement angeordnet. Dadurch ist es möglich, die drei Planetenradsätze unmittelbar aneinander anzuordnen, wodurch der axial kurze Aufbau des Getriebes weiter begünstigt wird. Dabei ist es vorteilhaft das vierte Schaltelement zumindest abschnittsweise radial innerhalb des fünften Schaltelements anzuordnen. Durch die radiale Schachtelung dieser beiden Schaltelemente kann die axiale Baulänge des Getriebes weiter verkürzt werden. Zudem liegen somit das zweite bis fünfte Schaltelement in unmittelbarer Nähe zueinander. Dies begünstigt die Ausbildung einer kompakten Aktuatorik für das zweite bis fünfte Schaltelement.

Gemäß einer Ausführungsform sind die drei Planetenradsätze axial zwischen dem ersten Schaltelement und dem zweiten bis fünften Schaltelement angeordnet. Sämtliche Schaltelemente sind also axial außerhalb der drei Planetenradsätze angeordnet. Dadurch können die drei Planetenradsätze besonders dicht aneinander angeordnet werden. Zugleich kann das Getriebe dadurch radial besonders kompakt gestaltet werden.

Das Getriebe kann eine Anschlusswelle aufweisen, welche als Schnittstelle zu einer getriebeexternen Antriebseinheit dient, beispielsweise einer Verbrennungskraftmaschine. Die Anschlusswelle ist über eine Trennkupplung mit der Antriebswelle verbindbar. Alternativ dazu kann die Trennkupplung samt der Anschlusswelle auch außerhalb des Getriebes angeordnet sein. Die Trennkupplung ist, als Bestandteil des Getriebes, vorzugsweise radial innerhalb der elektrischen Maschine, besonders bevorzugt innerhalb des Rotors angeordnet. Dadurch wird die kompakte Ausbildung des Getriebes zusätzlich begünstigt.

Das Getriebe kann Bestandteil eines Antriebsstrangs eines Hybridfahrzeugs sein. Der Antriebsstrang weist neben dem Getriebe auch eine Verbrennungskraftmaschine auf, welche über einen Torsionsschwingungsdämpfer mit der Antriebswelle des Getriebes drehelastisch verbunden ist. Zwischen Antriebswelle und Verbrennungskraftmaschine befindet sich auch eine Trennkupplung, welche Bestandteil des Getriebes sein kann. Die Abtriebswelle des Getriebes ist mit einem Achsgetriebe antriebswirkverbunden, welche mit Rädern des Hybridfahrzeugs verbunden ist. Der Antriebsstrang ermöglicht mehrere Antriebsmodi des Hybridfahrzeugs. In einem elektrischen Fahrbetrieb wird das Hybridfahrzeug von der elektrischen Maschine des Getriebes angetrieben. In einem verbrennungsmotorischen Betrieb wird das Hybridfahrzeug von der Verbrennungskraftmaschine angetrieben. In einem hybridischen Betrieb wird das Hybridfahrzeug sowohl von der Verbrennungskraftmaschine als auch von der elektrischen Maschine des Getriebes angetrieben.

Gemäß einem Verfahren zum Anfahren des Hybridfahrzeugs werden, ausgehend vom Stillstand des Hybridfahrzeugs und laufender Verbrennungskraftmaschine, die Trennkupplung sowie das zweite Schaltelement geschlossen, falls diese noch nicht geschlossen sind. Sind die Trennkupplung und das zweite Schaltelement geschlossen, so wird zum Anfahren in Vorwärtsrichtung das erste Schaltelement und zum Anfahren in Rückwärtsrichtung das fünfte Schaltelement ausgehend vom geöffneten Zustand in einen Schlupfzustand überführt. Dabei wird Drehmoment von der Antriebswelle zur Abtriebswelle hin übertragen, wobei durch den Schlupfbetrieb des ersten, bzw. des fünften Schaltelements ein Drehzahlausgleich ermöglicht wird. Das erste und fünfte Schaltelement dienen somit als Anfahrelemente, welche innerhalb des Getriebes angeordnet sind. Das erste und fünfte Schaltelement sind daher als kraftschlüssige Schaltelemente auszubilden, welche einen solchen Schlupfbetrieb erlauben. Die Trennkupplung dient somit nicht als Anfahrelement, und kann daher auch als formschlüssiges Schaltelement ausgebildet sein. Durch die getriebeinterne Anordnung der Anfahrelemente kann der Bauraumbedarf des Getriebes weiter verringert werden. Da das zweite Schaltelement als formschlüssiges Schaltelement ausgebildet ist, kann das zweite Schaltelement nicht als Anfahrelement dienen. Das Verfahren zum Anfahren steht somit im Zusammenhang mit dem Getriebe gemäß dem Patentanspruch 1. Denn ein als kraftschlüssiges Schaltelement ausgebildetes zweites Schaltelement wäre als Anfahrelement zu bevorzugen, da dieses sowohl im ersten Vorwärtsgang als auch im Rückwärtsgang geschlossen ist, und somit unabhängig von der Fahrtrichtung des Hybridfahrzeugs als Anfahrelement dienen könnte.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden. Eine ständig drehfeste Verbindung wird als Verbindung zwischen zwei Elementen bezeichnet, die stets besteht und deren verbundene Elemente somit stets die gleiche Drehzahl aufweisen.

Ausführungsbeispiele der Erfindung sind nachfolgend anhand der beigefügten Figuren detailliert beschrieben.
- Fig. 1: zeigt schematisch ein Getriebe entsprechend eines Ausführungsbeispiels der Erfindung.
- Fig. 2: zeigt einen Ausschnitt der schematischen Darstellung des Getriebes.
- Fig. 3: zeigt ein Schaltschema für das Getriebe.
- Fig. 4: zeigt einen Ausschnitt einer Schnittdarstellung des Getriebes gemäß einer ersten Ausführungsform.
- Fig. 5: zeigt einen Ausschnitt einer Schnittdarstellung des Getriebes gemäß einer zweiten Ausführungsform.
- Fig. 6: zeigt einen Ausschnitt einer Schnittdarstellung des Getriebes gemäß einer dritten Ausführungsform.
- Fig. 7: zeigt einen Antriebsstrang eines Hybridfahrzeugs.

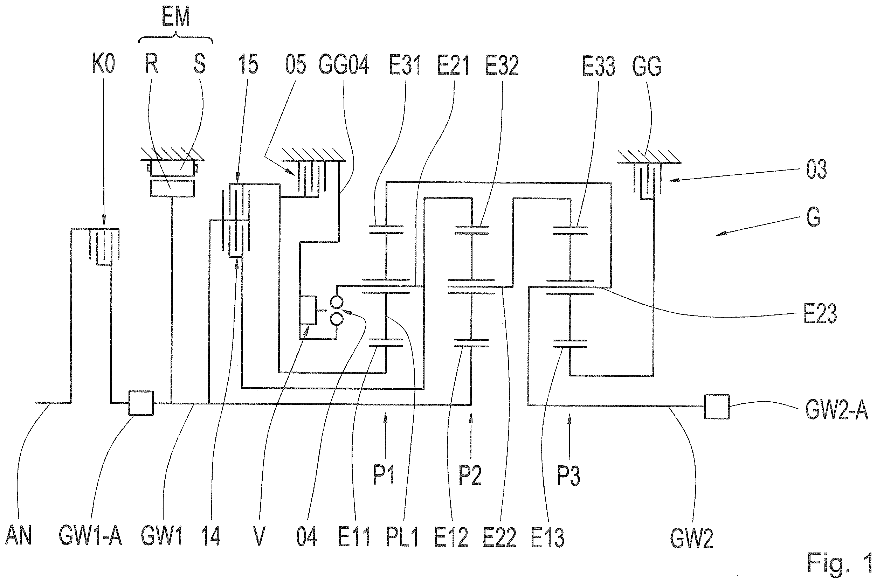

Fig. 1 zeigt schematisch ein Getriebe G entsprechend eines ersten Ausführungsbeispiels der Erfindung. Das Getriebe G weist einen ersten Planetenradsatz P1, einen zweiten Planetenradsatz P2 und einen dritten Planetenradsatz P3 auf. Jeder der drei Planetenradsätze P1, P2, P3 weist ein erstes Element E11, E12, E13, ein zweites Element E21, E22, E23 und ein drittes Element E31, E32, E33 auf. Das erste Element E11, E12, E13 ist stets durch ein Sonnenrad des jeweiligen Planetenradsatzes P1, P2, P3 gebildet. Ist der Planetenradsatz als ein Minus-Radsatz ausgebildet, so ist das zweite Element E21, E22, E23 durch einen Steg des jeweiligen Planetenradsatzes P1, P2, P3 gebildet und das dritte Element E31, E32, E33 durch das Hohlrad des jeweiligen Planetenradsatzes P1, P2, P3. In der in Fig. 1 dargestellten Ausführungsform des Getriebes G sind die Planetenradsätze P1, P2, P3 als Minus-Radsätze ausgebildet. Wäre der zweite Planetenradsatz P2 als Plus-Radsatz ausgebildet, so wird das zweite Element E22 durch dessen Hohlrad ausgebildet und dessen drittes Element E32 durch dessen Steg. Der Übersichtlichkeit halber ist diese Plus-Radsatzvariante nicht figürlich dargestellt.

Eine Antriebswelle GW1 ist mit dem ersten Element E12 des zweiten Planetenradsatzes P2 ständig verbunden. Eine Abtriebswelle GW2 ist mit dem dritten Element E31 des ersten Planetenradsatzes P1 und mit dem zweiten Element E23 des dritten Planetenradsatzes P3 ständig verbunden. Das zweite Element E21 des ersten Planetenradsatzes P1 ist mit dem dritten Element E32 des zweiten Planetenradsatzes P2 ständig verbunden. Das zweite Element E22 des zweiten Planetenradsatzes P2 ist mit dem dritten Element E33 des dritten Planetenradsatzes P3 ständig verbunden. Die drei Planetenradsätze P1, P2, P3 sind axial hintereinander in folgender Reihenfolge angeordnet: Erster Planetenradsatz P1, zweiter Planetenradsatz P2, dritter Planetenradsatz P3.

Das Getriebe G weist ferner ein erstes Schaltelement 03, ein zweites Schaltelement 04, ein drittes Schaltelement 05, ein viertes Schaltelement 14 und ein fünftes Schaltelement 15 auf. Das erste, dritte, vierte und fünfte Schaltelement 03, 05, 14, 15 sind als kraftschlüssige Schaltelemente gebildet, während das zweite Schaltelement 04 als formschlüssiges Schaltelement ausgebildet ist. Durch Schließen des ersten Schaltelements 03 ist das erste Element E13 des dritten Planetenradsatzes P3 drehfest festsetzbar. Das erste Element E13 des dritten Planetenradsatzes P3 ist somit schaltbar an ein drehfestes Bauelement GG des Getriebes G angebunden, wobei das drehfeste Bauelement GG durch ein Gehäuse des Getriebes G gebildet sein kann. In gleicher Weise ist durch Schließen des zweiten Schaltelements 04 das zweite Element E21 des ersten Planetenradsatzes P1 drehfest festsetzbar, und damit auch das dritte Element E32 des zweiten Planetenradsatzes P2. Eine Vorrichtung V zur Betätigung des zweiten Schaltelements ist an einem Haltelement GG04 befestigt, welches mit dem drehfesten Bauelement GG drehfest verbunden ist. Das erste Element E11 des ersten Planetenradsatzes P1 ist durch Schließen des dritten Schaltelements 05 drehfest festsetzbar. Durch Schließen des vierten Schaltelements 14 ist das dritte Element E32 des zweiten Planetenradsatzes P2 mit dem ersten Element E12 des zweiten Planetenradsatzes P2 verbindbar. Durch Schließen des fünften Schaltelements 15 ist die Antriebswelle GW1 mit dem ersten Element E11 des ersten Planetenradsatzes P1 verbindbar.

Das Getriebe G weist ferner eine elektrische Maschine EM auf, welche einen drehfesten Stator S und einen drehbaren Rotor R umfasst. Der Rotor R ist ständig mit der Antriebswelle GW1 verbunden. Die Antriebswelle GW1 ist über eine Trennkupplung K0 mit einer Anschlusswelle AN verbindbar. Die Anschlusswelle AN dient als Schnittstelle zu einer getriebeexternen Antriebseinheit, beispielsweise einer Verbrennungskraftmaschine.

Das zweite und dritte Schaltelement 04, 05 sind axial zwischen der elektrischen Maschine EM und dem ersten Planetenradsatz P1 angeordnet. Axial zwischen dem zweiten und dritten Schaltelement 04, 05 und der elektrischen Maschine EM sind außerdem das vierte und fünfte Schaltelement 14, 15 angeordnet, wobei das zweite Schaltelement 14 radial innerhalb des fünften Schaltelements 15 angeordnet ist. Äußere Schnittstellen GW1-A, GW2-A der Antriebswelle GW1 und der Abtriebswelle GW2 sind koaxial zueinander und an axial gegenüberliegenden Enden des Getriebes G angeordnet. Das Getriebe G ist dafür für die Anwendung in einem parallel zur Fahrtrichtung eines Kraftfahrzeugs ausgerichteten Antriebsstrang geeignet.

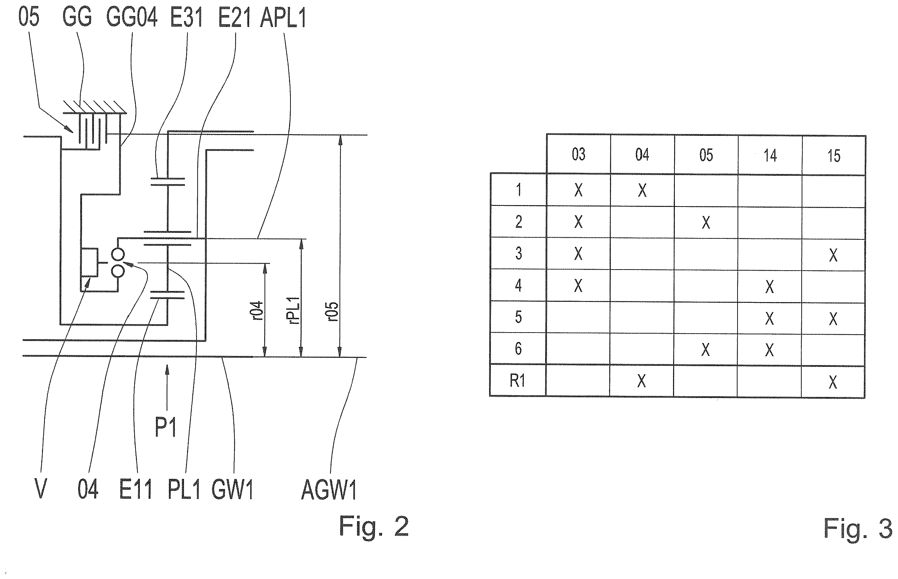

Fig. 2 zeigt einen Ausschnitt des Getriebes G, in dem der erste Planetenradsatz P1 mit seinen Anschlusswellen, die Antriebswelle GW1, das zweite und dritte Schaltelement 04, 05, die Vorrichtung V, das Haltelement GG04 und das drehfest Bauelement GG schematisch dargestellt sind. Der Wirkradius r04 des zweiten Schaltelements 04, der Wirkradius r05 des dritten Schaltelements 05 und der radiale Abstand rPL1 von der Antriebswellenachse AGW1 zur Drehachse APL1 eines der Planetenräder PL1 sind dabei kenntlich gemacht. Dabei ist der Wirkradius r04 des zweiten Schaltelements 04 kleiner als der radiale Abstand rPL1 zwischen der Antriebswellenachse AGW1 und der Drehachse APL1 eines der Planetenräder PL1. Der Wirkradius r05 des dritten Schaltelements 05 ist dabei größer als der der radiale Abstand rPL1 zwischen der Antriebswellenachse AGW1 und der Drehachse APL1 des Planetenrads PL1. Die Verbindung zwischen dem ersten Element E11 des ersten Planetenradsatzes P1 umgreift die Vorrichtung V radial innen.

Fig. 3 zeigt ein Schaltschema des Getriebes G. In den Zeilen des Schaltschemas sind sechs Vorwärtsgänge 1 bis 6 sowie ein Rückwärtsgang R1 dargestellt. In den Spalten des Schaltschemas ist durch ein X gekennzeichnet, in welchem Vorwärtsgang 1 bis 6, bzw. Rückwärtsgang R1 welche der Schaltelemente 03, 04, 05, 14, 15 geschlossen sind. Im ersten Vorwärtsgang 1 sind das erste Schaltelement 03 und das zweite Schaltelement 04 geschlossen. Im zweiten Vorwärtsgang 2 sind das erste Schaltelement 03 und das dritte Schaltelement 05 geschlossen. Im dritten Vorwärtsgang 3 sind das erste Schaltelement 03 und das fünfte Schaltelement 15 geschlossen. Im vierten Vorwärtsgang 4 sind das erste Schaltelement 03 und das vierte Schaltelement 14 geschlossen. Im fünften Vorwärtsgang 5 sind das vierte Schaltelement 14 und das fünfte Schaltelement 15 geschlossen. Im sechsten Vorwärtsgang 6 sind das dritte Schaltelement 05 und das vierte Schaltelement 14 geschlossen. Im Rückwärtsgang R1 sind das zweite Schaltelement 04 und das fünfte Schaltelement 15 geschlossen.

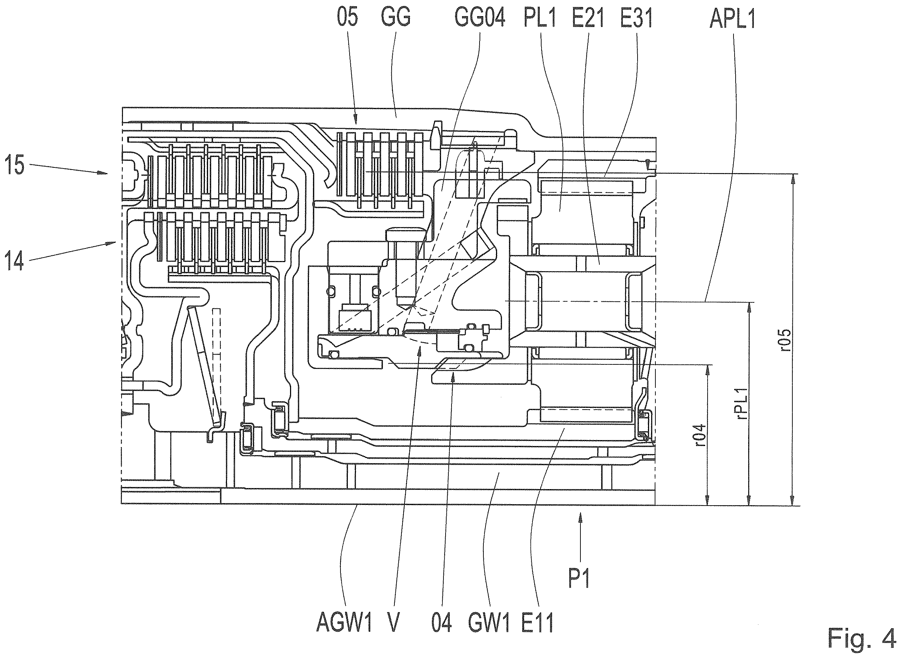

Fig. 4 zeigt eine Schnittdarstellung eines Teils des Getriebes G gemäß einer ersten Ausführungsform. Der erste Planetenradsatz P1 ist als Minus-Radsatz ausgebildet, wobei eine Klauenverzahnung mit dem Steg des ersten Planetenradsatzes P1 verbunden ist. Diese Klauenverzahnung ist Bestandteil des zweiten Schaltelements 04. An dem Halteelement GG04 ist die Vorrichtung V zur Betätigung des zweiten Schaltelements 04 befestigt, welche als hydraulische Vorrichtung ausgebildet ist. Ein überwiegender Anteil dieser Vorrichtung V ist radial innerhalb des dritten Schaltelements 05 angeordnet. Die Hydraulikfluidversorgung der Vorrichtung V verläuft dabei durch Kanäle innerhalb des Halteelements GG04. Die Vorrichtung V weist auch eine Positionserkennung des Klauenschaltelements 04 auf, welche die axiale Position an dem der Klauenverzahnung gegenüberliegenden Ende des verschiebbaren Elements ermittelt.

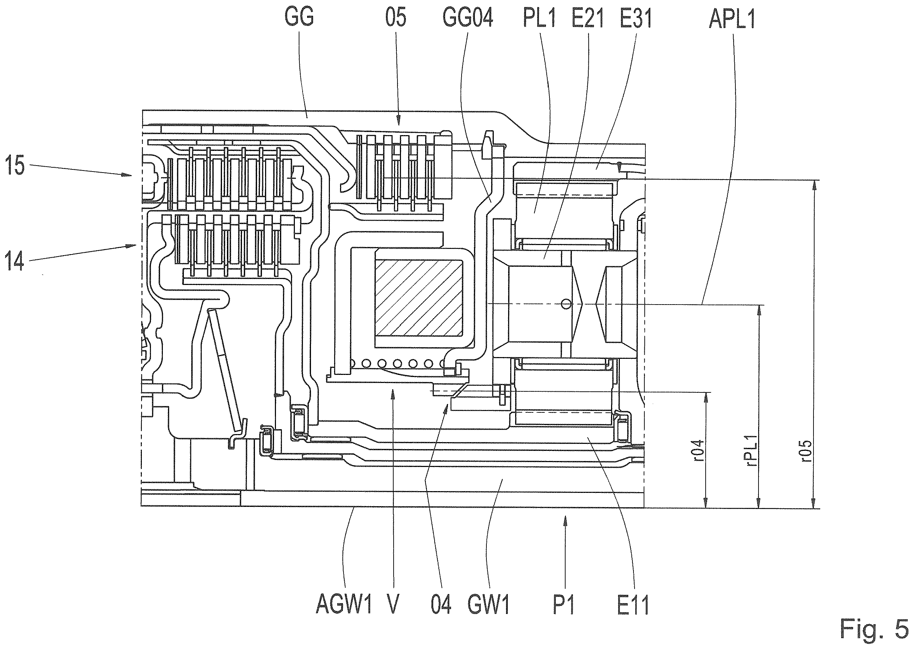

Fig. 5 zeigt eine Schnittdarstellung eines Teils des Getriebes G gemäß einer zweiten Ausführungsform. An dem Halteelement GG04 ist die Vorrichtung V zur Betätigung des zweiten Schaltelements 04 befestigt, welche als elektromagnetische Vorrichtung ausgebildet ist. Der schraffiert dargestellte Elektromagnet ist dazu eingerichtet bei Bestromung einen Anker gegen eine Federkraft anzuziehen, wobei der Anker mit dem axial verschiebbaren Element des Klauenschaltelements 04 fest verbunden ist. Im unbestromten Zustand wird das Klauenschaltelement 04 durch die Federkraft geöffnet. Die Vorrichtung V ist zu einem überwiegenden Anteil radial innerhalb des dritten Schaltelements 05 angeordnet.

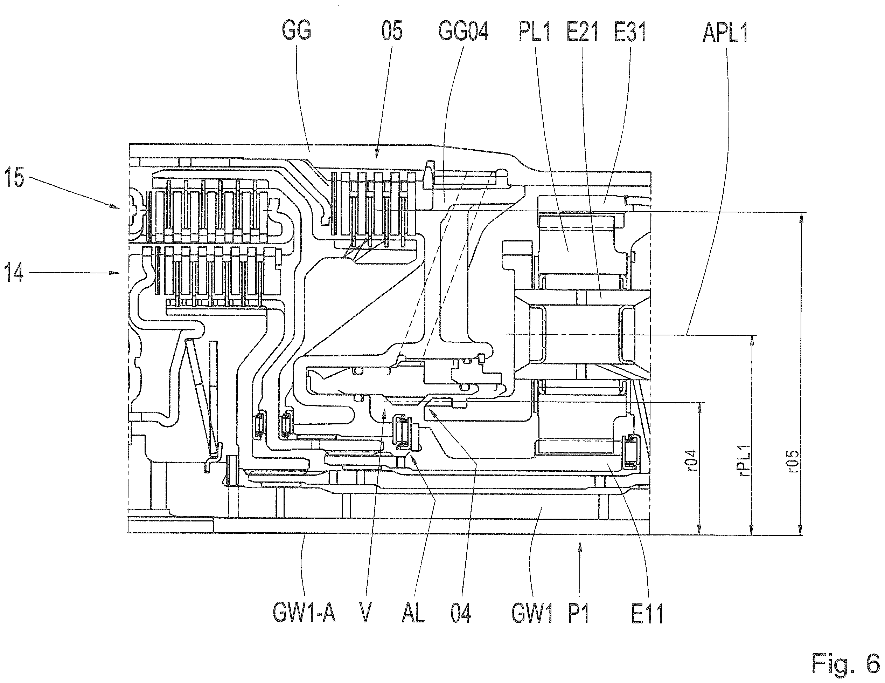

Fig. 6 zeigt eine Schnittdarstellung eines Teils des Getriebes G gemäß einer dritten Ausführungsform. Die Vorrichtung V zur Betätigung des zweiten Schaltelements 04 ist darin als hydraulische Betätigungseinrichtung ausgebildet, welche dazu eingerichtet ist das zweite Schaltelement 04 hydraulisch zu schließen und hydraulisch zu öffnen. Das Halteelement GG04 weist radial innerhalb der Vorrichtung V einen Anschlag auf, an dem sich ein Axiallager AL abstützt. Das Axiallager AL ist als Wälzlager ausgebildet, und ist dazu eingerichtet in axialer Richtung wirkende Kräfte vom ersten Planetenradsatz P1 auf das Halteelement GG04 zu übertragen. Der erste Planetenradsatz P1 stützt sich daher bei einer Belastung in Bildrichtung links über das Axiallager AL am Halteelement GG04 ab. Bei einer Belastung in Bildrichtung rechts stützt sich der erste Planetenradsatz P1 an einer Lagerung am Getriebegehäuse ab; dies ist in Fig. 6 nicht dargestellt. Radial innerhalb der Vorrichtung V weist das Halteelement einen weiteren Anschlag auf, an dem sich ein weiteres als Wälzlager ausgebildetes Axiallager abstützt. Dieses Axiallager könnte auch als Gleitscheibe ausgebildet sein, da die von den Planetenradsätzen hervorgerufene Axialbelastung zumindest zum überwiegenden Anteil über das Axiallager AL und das Haltelement GG04 am drehfesten Bauelement GG abgestützt wird.

Radial innerhalb des Axiallagers AL verläuft die Verbindung zwischen dem ersten Element E11 des ersten Planetenradsatzes P1 und dem dritten Schaltelement 05, wobei in dieser Verbindungswelle, welche eine Teilung aufweist, eine radiale Bohrung vorgesehen ist. Über diese radiale Bohrung kann dem Axiallager Öl zur Schmierung zugeführt werden.

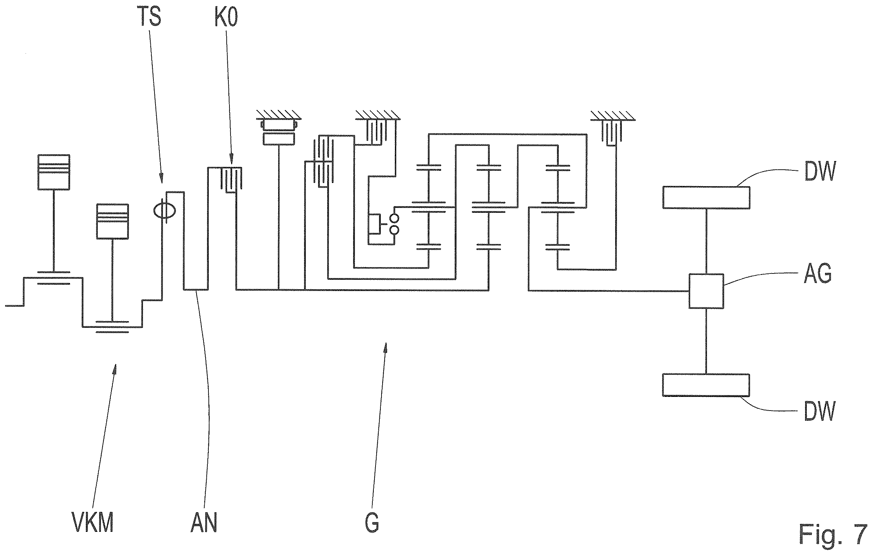

Fig. 7 zeigt schematisch einen Antriebsstrang eines Hybridfahrzeugs. Eine Verbrennungskraftmaschine VKM ist über einen Torsionsschwingungsdämpfer TS mit der Anschlusswelle AN des Getriebes G verbunden. Über die Trennkupplung K0 ist die Anschlusswelle AN mit der Antriebswelle GW1 des Getriebes G verbindbar. Die Abtriebswelle GW2 ist mit einem Achsgetriebe AG verbunden, über welches die an der Abtriebswelle GW2 anliegende Leistung auf Antriebsräder DW des Kraftfahrzeugs verteilt wird.

### Bezuqszeichen

- G: Getriebe
- GG: Drehfestes Bauelement
- GG04: Haltelement
- P1: Erster Planetenradsatz
- E11: Erstes Element des ersten Planetenradsatzes
- E21: Zweites Element des ersten Planetenradsatzes
- E31: Drittes Element des ersten Planetenradsatzes
- PL1: Planetenrad des ersten Planetenradsatzes
- APL1: Drehachse des Planetenrads
- rPL1: Radialer Abstand zwischen Antriebswellenachse und Planetenradachse
- P2: Zweiter Planetenradsatz
- E12: Erstes Element des zweiten Planetenradsatzes
- E22: Zweites Element des zweiten Planetenradsatzes
- E32: Drittes Element des zweiten Planetenradsatzes
- P3: Dritter Planetenradsatz
- E13: Erstes Element des dritten Planetenradsatzes
- E23: Zweites Element des dritten Planetenradsatzes
- E33: Drittes Element des dritten Planetenradsatzes
- GW1: Antriebswelle
- AGW1: Antriebswellenachse
- GW2: Abtriebswelle
- GW1-A: Äußere Schnittstelle der Antriebswelle
- GW2-A: Äußere Schnittstelle der Abtriebswelle
- EM: Elektrische Maschine
- R: Rotor
- S: Stator
- 03: Erstes Schaltelement
- 04: Zweites Schaltelement
- r04: Wirkradius des zweiten Schaltelements
- V: Vorrichtung zur Betätigung des zweiten Schaltelements
- 05: Drittes Schaltelement
- r05: Wirkradius des dritten Schaltelements
- 14: Viertes Schaltelement
- 15: Fünftes Schaltelement
- AL: Axiallager
- AN: Anschlusswelle
- K0: Trennkupplung
- VKM: Verbrennungskraftmaschine
- TS: Torsionsschwingungsdämpfer
- DW: Räder
- AG: Achsgetriebe
- 1 bis 6: Vorwärtsgänge
- R1: Rückwärtsgang

## Patentansprüche

1. Getriebe (G) für ein Hybridfahrzeug, wobei das Getriebe (G) eine Antriebswelle (GW1), eine Abtriebswelle (GW2), einen ersten, zweiten und dritten Planetenradsatz (P1, P2, P3), sowie ein erstes, zweites, drittes, viertes und fünftes Schaltelement (03, 04, 05, 14, 15) aufweist,
- wobei die Planetenradsätze (P1, P2, P3) je ein erstes Element (E11, E12, E13), ein zweites Element (E21, E22, E23) und ein drittes Element (E31, E32, E33) aufweisen, wobei das erste Element (E11, E12, E13) durch ein Sonnenrad des jeweiligen Planetenradsatzes (P1, P2, P3) gebildet ist, wobei das zweite Element (E21, E22, E23) im Falle eines Minus-Radsatzes durch einen Steg und im Falle eines Plus-Radsatzes durch ein Hohlrad des jeweiligen Planetenradsatzes (P1, P2, P3) gebildet ist, wobei das dritte Element (E31, E32, E33) im Falle eines Minus-Radsatzes durch das Hohlrad und im Falle eines Plus-Radsatzes durch den Steg des jeweiligen Planetenradsatzes (P1, P2, P3) gebildet ist,
- wobei der erste und dritte Planetenradsatz (P1, P3) je als ein Minus-Radsatz ausgebildet ist,
- wobei der erste, zweite und dritte Planetenradsatz (P1, P2, P3) axial hintereinander in der Reihenfolge erster Planetenradsatz (P1), zweiter Planetenradsatz (P2), dritter Planetenradsatz (P3) angeordnet sind,
- wobei die Antriebswelle (GW1) mit dem ersten Element (E12) des zweiten Planetenradsatzes (P2) ständig verbunden ist,
- wobei die Abtriebswelle (GW2) mit dem dritten Element (E31) des ersten Planetenradsatzes (P1) und mit dem zweiten Element (E23) des dritten Planetenradsatzes (P3) ständig verbunden ist,
- wobei das zweite Element (E21) des ersten Planetenradsatzes (P1) mit dem dritten Element (E32) des zweiten Planetenradsatzes (P2) ständig verbunden ist,
- wobei das zweite Element (E22) des zweiten Planetenradsatzes (P2) mit dem dritten Element (E33) des dritten Planetenradsatzes (P3) ständig verbunden ist,
- wobei durch Schließen des ersten Schaltelements (03) das erste Element (E13) des dritten Planetenradsatzes (P3) drehfest festsetzbar ist,
- wobei durch Schließen des zweiten Schaltelements (04) das zweite Element (E21) des ersten Planetenradsatzes (P1) drehfest festsetzbar ist,
- wobei durch Schließen des dritten Schaltelements (05) das erste Element (E11) des ersten Planetenradsatzes (P1) drehfest festsetzbar ist,
- wobei durch Schließen des vierten Schaltelements (14) zwei der drei Elemente (E12, E22, E32) des zweiten Planetenradsatzes (P2) miteinander verbindbar sind,
- wobei durch Schließen des fünften Schaltelements (15) die Antriebswelle (GW1) mit dem ersten Element (E11) des ersten Planetenradsatzes (P1) verbindbar ist,
**dadurch gekennzeichnet, dass**
- das Getriebe (G)eine elektrische Maschine (EM)mit einem drehfesten Stator (S) und einem drehbaren, mit der Antriebswelle (GW1) ständig verbundenen Rotor (R) aufweist,
- wobei das zweite und dritte Schaltelement (04, 05) axial zwischen der elektrischen Maschine (EM) und dem ersten Planetenradsatz (P1) angeordnet sind,
- wobei das zweite Schaltelement (04) als formschlüssiges Schaltelement ausgebildet ist und das dritte Schaltelement (05) als kraftschlüssiges Schaltelement ausgebildet ist,
- wobei der Wirkradius (r05) des dritten Schaltelements (05) größer ist als der Wirkradius (r04) des zweiten Schaltelements (04),
- wobei der Wirkradius (r04) des zweiten Schaltelements (04) kleiner ist als der radiale Abstand (rPL1) zwischen der Antriebswellenachse (AGW1) und der Drehachse (APL1) eines Planetenrads (PL1) des ersten Planetenradsatzes (P1), wobei der Wirkradius (r05) des dritten Schaltelements (05) größer ist als der radiale Abstand (rPL1) zwischen der Antriebswellenachse (AGW1) und der Drehachse (APL1) des Planetenrads (PL1) des ersten Planetenradsatzes (P1).

2. Getriebe (G) nach Anspruch 1, **dadurch gekennzeichnet, dass** das erste, vierte und fünfte Schaltelement (03, 14, 15) als kraftschlüssige Schaltelemente ausgebildet sind.

3. Getriebe (G) nach einem der vorangehenden Ansprüche, **dadurch gekennzeichnet, dass** eine Vorrichtung (V) zur Betätigung des zweiten Schaltelements (04) zumindest abschnittsweise radial innerhalb des dritten Schaltelements (05) angeordnet ist.

4. Getriebe (G) nach Anspruch 3, **dadurch gekennzeichnet, dass** die Vorrichtung (V) zur Betätigung des zweiten Schaltelements (04) zu einem überwiegenden Anteil in einem Bauraum angeordnet ist, welcher sich radial innerhalb des dritten Schaltelements (05) befindet.

5. Getriebe (G) nach einem der vorangehenden Ansprüche, **dadurch gekennzeichnet, dass** eine Verbindung zwischen dem ersten Element (E11) des ersten Planetenradsatzes (P1) und dem dritten Schaltelement (05) zumindest abschnittsweise radial innerhalb der Vorrichtung (V) zur Betätigung des zweiten Schaltelements (04) angeordnet ist.

6. Getriebe (G) nach einem der vorangehenden Ansprüche, **dadurch gekennzeichnet, dass** die Vorrichtung (V) zur Betätigung des zweiten Schaltelements (04) mit einem Halteelement (GG04) drehfest verbunden ist, welches drehfest mit einem drehfesten Bauelement (GG) des Getriebes (G) verbunden ist.

7. Getriebe (G) nach Anspruch 6, **dadurch gekennzeichnet, dass** das Halteelement (GG04) mit zumindest einem Axiallager (AL) zusammenwirkt, wobei das Axiallager (AL) dazu eingerichtet ist axiale Kräfte von zumindest einem der Planetenradsätze (P1, P2, P3) auf das Halteelement (GG04) zu übertragen.

8. Getriebe (G) nach Anspruch 6 oder Anspruch 7, **dadurch gekennzeichnet, dass** die Verbindung zwischen dem Halteelement (GG04) und dem drehfesten Bauelement (GG) axial zwischen dem dritten Schaltelement (05) und dem ersten Planetenradsatz (P1) angeordnet ist.

9. Getriebe (G) nach einem der Ansprüche 6 bis 8, **dadurch gekennzeichnet, dass** die Vorrichtung (V) zur Betätigung des zweiten Schaltelements (04) als eine hydraulisehe Vorrichtung ausgebildet ist, welche dazu eingerichtet ist das zweite Schaltelement (04) hydraulisch zu schließen und bevorzugt auch hydraulisch zu öffnen, wobei die Hydraulikfluidzuführung zur Vorrichtung (V) durch zumindest einen Fluidkanal im Halteelement (GG04) erfolgt.

10. Getriebe (G) nach einem der vorangehenden Ansprüche, **dadurch gekennzeichnet,dass** die Vorrichtung (V) zur Betätigung des zweiten Schaltelements (04) als eine elektromagnetische oder elektromechanische Vorrichtung ausgebildet ist, welche dazu eingerichtet ist das zweite Schaltelement (04) zu schließen.

11. Getriebe (G) nach einem der vorangehenden Ansprüche, **dadurch gekennzeichnet, dass** das vierte und fünfte Schaltelement (14, 15) axial zwischen der elektrischen Maschine (EM) und dem zweiten und dritten Schaltelement (04, 05) angeordnet sind, wobei das vierte Schaltelement (14) zumindest abschnittsweise radial innerhalb des fünften Schaltelements (15) angeordnet ist.

12. Getriebe (G) nach einem der vorangehenden Ansprüche, **dadurch gekennzeichnet, dass** die drei Planetenradsätze (P1, P2, P3) axial zwischen dem ersten Schaltelement (03) und dem zweiten bis fünften Schaltelement (04, 05, 14, 15) angeordnet sind.

13. Getriebe (G) nach einem der vorangehenden Ansprüche, **dadurch gekennzeichnet, dass** das Getriebe (G) eine Anschlusswelle (AN) als Schnittstelle zu einer getriebeexternen Antriebseinheit aufweist, wobei die Anschlusswelle über eine Trennkupplung (K0) mit der Antriebswelle (GW1) verbindbar ist, und wobei die Trennkupplung (K0) radial innerhalb der elektrischen Maschine (EM) angeordnet ist.

14. Antriebsstrang für ein Hybridfahrzeug, wobei der Antriebsstrang eine Verbrennungskraftmaschine (VKM), ein Getriebe (G) nach einem der Ansprüche 1 bis 13 sowie ein mit Rädern (DW) des Hybridfahrzeugs verbundenes Achsgetriebe (AG) aufweist, wobei die Antriebswelle (GW1) des Getriebes (G) über die getriebeinterne oder eine getriebeexterne Trennkupplung (K0) und einen Torsionsschwingungsdämpfer (TS) mit der Verbrennungskraftmaschine (VKM) drehelastisch verbunden ist, und wobei die Abtriebswelle (GW2) des Getriebes (G) mit dem Achsgetriebe (AG) antriebswirkverbunden ist.

## Claims

1. Transmission (G) for a hybrid vehicle, the transmission (G) having a drive shaft (GW1), an output shaft (GW2), a first, second and third planetary gear set (P1, P2, P3), and a first, second, third, fourth and fifth shifting element (03, 04, 05, 14, 15),
- the planetary gear sets (P1, P2, P3) in each case having a first element (E11, E12, E13), a second element (E21, E22, E23) and a third element (E31, E32, E33), the first element (E11, E12, E13) being formed by way of a sun gear of the respective planetary gear set (P1, P2, P3), the second element (E21, E22, E23) being formed by way of a spider in the case of a negative gear set and by way of an internal gear of the respective planetary gear set (P1, P2, P3) in the case of a positive gear set, the third element (E31, E32, E33) being formed by way of the internal gear in the case of a negative gear set and by way of the spider of the respective planetary gear set (P1, P2, P3) in the case of a positive gear set,
- the first and third planetary gear set (P1, P3) being configured in each case as a negative gear set,
- the first, second and third planetary gear set (P1, P2, P3) being arranged axially behind one another in the order first planetary gear set (P1), second planetary gear set (P2), third planetary gear set (P3),
- the drive shaft (GW1) being connected permanently to the first element (E12) of the second planetary gear set (P2),
- the output shaft (GW2) being connected permanently to the third element (E31) of the first planetary gear set (P1) and to the second element (E23) of the third planetary gear set (P3),
- the second element (E21) of the first planetary gear set (P1) being connected permanently to the third element (E32) of the second planetary gear set (P2),
- the second element (E22) of the second planetary gear set (P2) being connected permanently to the third element (E33) of the third planetary gear set (P3),
- it being possible for the first element (E13) of the third planetary gear set (P3) to be locked such that it cannot rotate by way of closure of the first shifting element (03),
- it being possible for the second element (E21) of the first planetary gear set (P1) to be locked such that it cannot rotate by way of closure of the second shifting element (04),
- it being possible for the first element (E11) of the first planetary gear set (P1) to be locked such that it cannot rotate by way of closure of the third shifting element (05),
- it being possible for two of the three elements (E12, E22, E32) of the second planetary gear set (P2) to be connected to one another by way of closure of the fourth shifting element (14),
- it being possible for the drive shaft (GW1) to be connected to the first element (E11) of the first planetary gear set (P1) by way of closure of the fifth shifting element (15),
**characterized in that**
- the transmission (G) having an electric machine (EM) with a non-rotatable stator (S) and a rotatable rotor (R) that is permanently connected to the drive shaft (GW1),
- the second and third shifting element (04, 05) being arranged axially between the electric machine (EM) and the first planetary gear set (P1),
- the second shifting element (04) being configured as a positively locking shifting element, and the third shifting element (05) being configured as a non-positive shifting element,
- the effective radius (r05) of the third shifting element (05) being greater than the effective radius (r04) of the second shifting element (04),
- the effective radius (r04) of the second shifting element (04) being smaller than the radial spacing (rPL1) between the drive shaft axis (AGW1) and the rotational axis (APL1) of a planetary gear (PL1) of the first planetary gear set (P1), the effective radius (r05) of the third shifting element (05) being greater than the radial spacing (rPL1) between the drive shaft axis (AGW1) and the rotational axis (APL1) of the planetary gear (PL1) of the first planetary gear set (P1).

2. Transmission (G) according to Claim 1, **characterized in that** the first, fourth and fifth shifting element (03, 14, 15) are configured as non-positive shifting elements.

3. Transmission (G) according to either of the preceding claims, **characterized in that** an apparatus (V) for actuating the second shifting element (04) is arranged at least in sections radially within the third shifting element (05).

4. Transmission (G) according to Claim 3, **characterized in that** the apparatus (V) for actuating the second shifting element (04) is arranged predominantly in an installation space which is situated radially within the third shifting element (05) .

5. Transmission (G) according to one of the preceding claims, **characterized in that** a connection between the first element (E11) of the first planetary gear set (P1) and the third shifting element (05) is arranged at least in sections radially within the apparatus (V) for actuating the second shifting element (04).

6. Transmission (G) according to one of the preceding claims, **characterized in that** the apparatus (V) for actuating the second shifting element (04) is connected fixedly to a holding element (GG04) so as to rotate with it, which holding element (GG04) is connected non-rotatably to a non-rotatable component (GG) of the transmission (G).

7. Transmission (G) according to Claim 6, **characterized in that** the holding element (GG04) interacts with at least one axial bearing (AL), the axial bearing (AL) being set up to transmit axial forces from at least one of the planetary gear sets (P1, P2, P3) to the holding element (GG04).

8. Transmission (G) according to Claim 6 or Claim 7, **characterized in that** the connection between the holding element (GG04) and the non-rotatable component (GG) is arranged axially between the third shifting element (05) and the first planetary gear set (P1).

9. Transmission (G) according to one of Claims 6 to 8, **characterized in that** the apparatus (V) for actuating the second shifting element (04) is configured as a hydraulic apparatus which is set up to hydraulically close and preferably also to hydraulically open the second shifting element (04), the hydraulic-fluid supply to the apparatus (V) taking place through at least one fluid duct in the holding element (GG04).

10. Transmission (G) according to one of the preceding claims, **characterized in that** the apparatus (V) for actuating the second shifting element (04) is configured as an electromagnetic or electromechanical apparatus which is set up to close the second shifting element (04).

11. Transmission (G) according to one of the preceding claims, **characterized in that** the fourth and fifth shifting element (14, 15) are arranged axially between the electric machine (EM) and the second and third shifting element (04, 05), the fourth shifting element (14) being arranged at least in sections radially within the fifth shifting element (15).

12. Transmission (G) according to one of the preceding claims, **characterized in that** the three planetary gear sets (P1, P2, P3) are arranged axially between the first shifting element (03) and the second to fifth shifting element (04, 05, 14, 15).

13. Transmission (G) according to one of the preceding claims, **characterized in that** the transmission (G) has a connecting shaft (AN) as an interface to a drive unit outside the transmission, it being possible for the connecting shaft to be connected to the drive shaft (GW1) via a separating clutch (K0), and the separating clutch (K0) being arranged radially within the electric machine (EM).

14. Drive train for a hybrid vehicle, the drive train having an internal combustion engine (VKM), a transmission (G) according to one of Claims 1 to 13, and an axle drive (AG) which is connected to wheels (DW) of the hybrid vehicle, the drive shaft (GW1) of the transmission (G) being connected in a rotationally elastic manner to the internal combustion engine (VKM) via the separating clutch (K0) which is inside the transmission or a separating clutch (K0) which is outside the transmission and a torsional vibration damper (TS), and the output shaft (GW2) of the transmission (G) being operatively connected in drive terms to the axle drive (AG).

## Revendications

1. Boîte de vitesses (G) pour un véhicule hybride, dans laquelle la boîte de vitesses (G) présente un arbre de commande (GW1), un arbre de sortie (GW2), un premier, un deuxième et un troisième trains planétaires (P1, P2, P3), ainsi qu'un premier, un deuxième, un troisième, un quatrième et un cinquième éléments de commutation (03, 04, 05, 14, 15),
- dans laquelle les trains planétaires (P1, P2, P3) présentent chacun un premier élément (E11, E12, E13), un deuxième élément (E21, E22, E23) et un troisième élément (E31, E32, E33), dans laquelle le premier élément (E11, E12, E13) est formé par une roue solaire du train planétaire respectif (P1, P2, P3), dans laquelle le deuxième élément (E21, E22, E23) est formé dans le cas d'une paire de roues moins par une nervure et dans le cas d'une paire de roues plus par une couronne du train planétaire respectif (P1, P2, P3), dans laquelle le troisième élément (E31, E32, E33) est formé dans le cas d'une paire de roues moins par la couronne et dans le cas d'une paire de roues plus par la nervure du train planétaire respectif (P1, P2, P3),
- dans laquelle le premier et le troisième trains planétaires (P1, P3) sont formés chacun par une paire de roues moins,
- dans laquelle le premier, le deuxième et le troisième trains planétaires (P1, P2, P3) sont disposés axialement l'un derrière l'autre dans l'ordre: premier train planétaire (P1), deuxième train planétaire (P2), troisième train planétaire (P3),
- dans laquelle l'arbre de commande (GW1) est relié en permanence au premier élément (E12) du deuxième train planétaire (P2),
- dans laquelle l'arbre de sortie (GW2) est relié en permanence au troisième élément (E31) du premier train planétaire (P1) et au deuxième élément (E23) du troisième train planétaire (P3),
- dans laquelle le deuxième élément (21) du premier train planétaire (P1) est relié en permanence au troisième élément (E32) du deuxième train planétaire (P2),
- dans laquelle le deuxième élément (E22) du deuxième train planétaire (P2) est relié en permanence au troisième élément (E33) du troisième train planétaire (P3),
- dans laquelle le premier élément (E13) du troisième train planétaire (P3) peut être calé en rotation par la fermeture du premier élément de commutation (03),
- dans laquelle le deuxième élément (E21) du premier train planétaire (P1) peut être calé en rotation par la fermeture du deuxième élément de commutation (04),
- dans laquelle le premier élément (E11) du premier train planétaire (P1) peut être calé en rotation par la fermeture du troisième élément de commutation (05),
- dans laquelle deux des trois éléments (E12, E22, E32) du deuxième train planétaire (P2) peuvent être reliés l'un à l'autre par la fermeture du quatrième élément de commutation (14),
- dans laquelle l'arbre de commande (GW1) peut être relié au premier élément (E11) du premier train planétaire (P1) par la fermeture du cinquième élément de commutation (15),
**caractérisée en ce que**
- la boîte de vitesses (G) présente une machine électrique (EM) présente avec un stator fixe (S) et un rotor tournant (R), dans laquelle le rotor (R) de la machine électrique (EM) est relié en permanence à l'arbre de commande (GW1),
- dans laquelle le deuxième et le troisième éléments de commutation (04, 05) sont disposés axialement entre la machine électrique (EM) et le premier train planétaire (P1),
- dans laquelle le deuxième élément de commutation (04) est constitué par un élément de commutation à emboîtement et le troisième élément de commutation (05) est constitué par un élément de commutation par force,
- dans laquelle le rayon d'action (r05) du troisième élément de commutation (05) est plus grand que le rayon d'action (r04) du deuxième élément de commutation (04),
- dans laquelle le rayon d'action (r04) du deuxième élément de commutation (04) est plus petit que la distance radiale (rPL1) entre l'axe de l'arbre de commande (AGW1) et l'axe de rotation (APL1) d'une roue planétaire (PL1) du premier train planétaire (P1), dans laquelle le rayon d'action (r05) du troisième élément de commutation (05) est plus grand que la distance radiale (rPL1) entre l'axe de l'arbre de commande (AGW1) et l'axe de rotation (APL1) de la roue planétaire (PL1) du premier train planétaire (P1) .

2. Boîte de vitesses (G) selon la revendication 1, **caractérisée en ce que** le premier, le quatrième et le cinquième éléments de commutation (03, 14, 15) sont constitués par des éléments de commutation par force.

3. Boîte de vitesses (G) selon l'une quelconque des revendications précédentes, **caractérisée en ce qu'**un dispositif (V) pour l'actionnement du deuxième élément de commutation (04) est disposé au moins en partie radialement à l'intérieur du troisième élément de commutation (05).

4. Boîte de vitesses (G) selon la revendication 3, **caractérisée en ce que** le dispositif (V) pour l'actionnement du deuxième élément de commutation (04) est disposé pour une part prépondérante dans une chambre de construction, qui se trouve radialement à l'intérieur du troisième élément de commutation (05).

5. Boîte de vitesses (G) selon l'une quelconque des revendications précédentes, **caractérisée en ce qu'**une liaison entre le premier élément (E11) du premier train planétaire (P1) et le troisième élément de commutation (05) est disposée au moins en partie radialement à l'intérieur du dispositif (V) pour l'actionnement du deuxième élément de commutation (04).

6. Boîte de vitesses (G) selon l'une quelconque des revendications précédentes, **caractérisée en ce que** le dispositif (V) pour l'actionnement du deuxième élément de commutation (04) est relié de façon solidaire en rotation à un élément de maintien (GG04), qui est relié de façon solidaire en rotation à un élément de construction calé en rotation (GG) de la boîte de vitesses (G).

7. Boîte de vitesses (G) selon la revendication 6, **caractérisée en ce que** l'élément de maintien (GG04) coopère avec au moins un palier axial (AL), dans laquelle le palier axial (AL) est conçu pour transmettre des forces axiales d'au moins un des trains planétaires (P1, P2, P3) à l'élément de maintien (GG04).

8. Boîte de vitesses (G) selon la revendication 6 ou la revendication 7, **caractérisée en ce que** la liaison entre l'élément de maintien (GG04) et l'élément de construction calé en rotation (GG) est disposée axialement entre le troisième élément de commutation (05) et le premier train planétaire (P1).

9. Boîte de vitesses (G) selon l'une quelconque des revendications 6 à 8, **caractérisée en ce que** le dispositif (V) pour l'actionnement du deuxième élément de commutation (04) est formé par une arrivée de fluide hydraulique, qui est conçue pour fermer le deuxième élément de commutation (04) et de préférence aussi l'ouvrir hydrauliquement, dans laquelle l'arrivée de fluide hydraulique vers le dispositif (V) est effectuée par au moins un canal de fluide dans l'élément de maintien (GG04) .

10. Boîte de vitesses (G) selon l'une quelconque des revendications précédentes, **caractérisée en ce que** le dispositif (V) pour l'actionnement du deuxième élément de commutation (04) est réalisé sous la forme d'un dispositif électromagnétique ou électromécanique, qui est conçu pour fermer le deuxième élément de commutation (04).

11. Boîte de vitesses (G) selon l'une quelconque des revendications précédentes, **caractérisée en ce que** le quatrième et le cinquième éléments de commutation (14, 15) sont disposés axialement entre la machine électrique (EM) et le deuxième et le troisième éléments de commutation (04, 05), dans laquelle le quatrième élément de commutation (14) est disposé au moins en partie radialement à l'intérieur du cinquième élément de commutation (15).

12. Boîte de vitesses (G) selon l'une quelconque des revendications précédentes, **caractérisée en ce que** les trois trains planétaires (P1, P2, P3) sont disposés axialement entre le premier élément de commutation (03) et les deuxième au cinquième éléments de commutation (04, 05, 14, 15).

13. Boîte de vitesses (G) selon l'une quelconque des revendications précédentes, **caractérisée en ce que** la boîte de vitesses (G) présente un arbre de liaison (AN) comme interface vers une unité d'entraînement externe à la boîte de vitesses, dans laquelle l'arbre de liaison peut être relié à l'arbre de commande (GW1) par un embrayage de séparation (K0), et dans laquelle l'embrayage de séparation (K0) est disposé radialement à l'intérieur de la machine électrique (EM).

14. Chaîne cinématique pour un véhicule hybride, dans laquelle la chaîne cinématique présente un moteur à combustion interne (VKM), une boîte de vitesses (G) selon l'une quelconque des revendications 1 à 13 ainsi qu'une transmission d'essieu (AG) reliée à des roues (DW) du véhicule hybride, dans laquelle l'arbre de commande (GW1) de la boîte de vitesses (G) est relié de façon élastiquement rotative au moteur à combustion interne (VKM) par l'intermédiaire de l'embrayage de séparation interne ou d'un embrayage de séparation externe (K0) et d'un amortisseur de vibrations de torsion (TS), et dans laquelle l'arbre de sortie (GW2) de la boîte de vitesses (G) est en liaison active d'entraînement avec la transmission d'essieu (AG).
